# EUROPEAN PATENT APPLICATION

(11) **EP 1 838 073 A2**
(43) Date of publication of application: **26.09.2007**
(21) Application number: 07104413.5
(22) Date of filing: 19.03.2007
(51) Int. Cl.: H04M 1/02

(54) **Self-cradling type portable terminal**

(30) Priority: 22.03.2006 KR 20060026138
(71) Applicant: Samsung Electronics Co., Ltd., Suwon-si, Gyeonggi-Do (KR)
(72) Inventor: Park, Jun-Sang, Gyeonggi-do (KR); Kim, Joon-Suh, Gyeonggi-do (KR); Lee, Chang-Soo, Gyeonggi-do (KR)
(74) Representative: Zimmer, Franz-Josef

(57) **Abstract**

A self-cradling type portable terminal is disclosed. The self-cradling type portable terminal includes a main body (100) having a first display device (110) and a second display device (120) on its top and bottom faces (101, 106) and at least one cradle main body (200) having a plurality of keys (210,220,221) and coupled to the main body (100) in such a way to rotate with respect to an eccentric hinge axis (A) that extends in the lengthwise direction of the main body (100) and penetrates areas, other than the centers of sides (104,105) of the main body (100), thereby supporting an inclined state of the main body (100).

## Description

### BACKGROUND OF THE INVENTION

### 1. Field of the Invention

The present invention generally relates to a portable terminal such as a Digital Multimedia Broadcasting (DMB) phone, a game phone, a chatting phone, a camera phone, an MP3 phone, a cellular phone, a Personal Communication Service (PCS) phone, a Personal Digital Assistant (PDA), and a Hand Held Phone (HHP), and in particular, to a portable terminal having a self-cradling function for convenient use in multimedia environments.

### 2. Description of the Related Art

In general, the term "portable terminal" refers to an electronic apparatus carried by a user to perform wireless communication. In terms of portability, designs of such portable terminals tend to be compact, slim, and light, and also include multimedia availability for a wide variety of functions. Future portable terminals are expected to incorporate greater multi-functionality and multipurpose utilization. Future portable terminals will also be more compact and light and will be modified to be suitable for various multimedia environments or Internet environments.

Conventional portable terminals may be classified into various types according to their appearance. For example, conventional portable terminals may be classified as bar-type portable terminals, flip-type portable terminals, and folder-type portable terminals. The bar-type portable terminal has a single housing shaped like a bar. The flip-type portable terminal has a flip which is pivotably mounted to a bar-shaped housing by a hinge device. The folder-type portable terminal has a folder coupled to a single bar-shaped housing by a hinge device to allow the folder to be rotated in order to be folded towards or unfolded away from the housing.

Further, portable terminals may be classified into neck wearable type portable terminals and wrist wearable type portable terminals according to the position in which a user puts on the portable terminal. The neck wearable type portable terminal is worn by a user around the neck using a string, while the wrist wearable type portable terminal is worn by a user around the wrist.

Additionally, portable terminals may be further classified as rotation-type portable terminals and sliding-type portable terminals based upon the way the portable terminals are opened or closed. In the rotation-type portable terminal, two housings are coupled to each other to allow one housing to rotate open or closed relative to the other while facing each other. In the sliding-type portable terminal, two housings are coupled to each other to allow one housing to slide along a longitudinal direction to open or close the sliding-type portable terminal. These variously classified portable terminals can be easily understood by those skilled in the art.

Conventional portable terminals are capable of transmitting data at a high speed in addition to performing voice communication. For example, according to the increased demand by consumers, portable terminals now provide a service using a wireless communication technology capable of transmitting data at a high speed.

Current portable terminals may also be equipped with a camera lens which enables each of the communication apparatuses to transmit an image signal. Current conventional portable communication apparatuses may have an external or imbedded camera lens module which allows a user to perform video communication with a partner or to take a photograph of a desired object.

However, conventional portable terminals require a separate cradle to be cradled on an incline, making it convenient for a user to view images without a separate cradle.

In particular, it is necessary to inclinedly cradle a display device on an incline and provide stereo sound in a Digital Multimedia Broadcasting (DMB) mode in order to allow the user to conveniently watch various moving pictures. However, even when a separate cradle is provided, the user cannot adjust the cradled angle of the conventional portable terminal and experiences inconvenience in cradling the conventional portable terminal.

Moreover, the conventional portable terminal may be dropped due to careless use, which may cause a crack in or damage to the main body case of the portable terminal. In particular, after dropped, the portable terminal can have a crack at its corner portions. Therefore, there is a need for structurally robust casing of the contour of a main body.

Furthermore, a single display device of the conventional portable terminal can be used both in a phone mode and in a DMB mode. However, the display device is not convenient in multimedia environments. For example, a general display device does not cause any inconvenience in the phone mode, but a wide display device is required in the DMB mode.

### SUMMARY OF THE INVENTION

It is, therefore, the object of the present invention to provide a portable terminal, which is economic to users or manufacturers by providing a self-cradling function. This object is solved by the subject matter of the independent claim.

It is another aspect of the present invention to provide a portable terminal which is easy to cradle.

It is yet another aspect of the present invention to provide a portable terminal which is convenient in multimedia environments including a DMB mode in which users can watch various moving pictures displayed on a display device.

It is still another aspect of the present invention to provide a portable terminal, which is convenient both in a phone mode and in a moving picture watching mode through two display devices.

It is another aspect of the present invention to provide a portable terminal, which provides structural robustness against rotation or dropping through metal bands in a plurality of sides of a main body, thereby improving its reliability.

It is yet another aspect of the present invention to provide a portable terminal, which allows a user to conveniently and selectively watch a displayed image through display devices on top and bottom faces of a main body.

It is still another aspect of the present invention to provide a portable terminal, which allows convenient manipulation by using a wheel-type key as a data input device.

It is another aspect of the present invention to provide a portable terminal, which provides stable cradling of a main body using the weight of a battery that is embedded in a cradle main body.

To achieve the above and other aspects, there is provided a self-cradling type portable terminal. The self-cradling type portable terminal includes a main body having a first display device and a second display device on its top and bottom faces and at least one cradle main body having at least one key and coupled to the main body in such a way to rotate with respect to an eccentric hinge axis that extends in the lengthwise direction of the main body and penetrates areas, except for the centers of sides of the main body, thereby supporting an inclined state of the main body.

### BRIEF DESCRIPTION OF THE DRAWINGS

The above and other aspects, features and advantages of the present invention will become more apparent from the following detailed description when taken in conjunction with the accompanying drawings in which:
FIG. 1 is a perspective view of a portable terminal according to the present invention;
FIG 2 is a front view of FIG. 1;
FIG. 3 is a bottom view of FIG. 1;
FIG. 4 is a side view of FIG. 1;
FIG. 5 is a perspective view illustrating a portable terminal cradled at an incline according to the present invention, viewed from a front right side;
FIG. 6 is a perspective view illustrating a portable terminal cradled at an incline according to the present invention, viewed from a rear right side; and
FIG. 7 is a side sectional view illustrating the mounted state of a battery embedded in a cradle main body of a portable terminal according to the present invention.

### DETAILED DESCRIPTION OF PREFERRED EMBODIMENTS

A preferred embodiment of the present invention will now be described in detail with reference to the annexed drawings. In the following description, a detailed description of known functions and configurations incorporated herein has been omitted for conciseness.

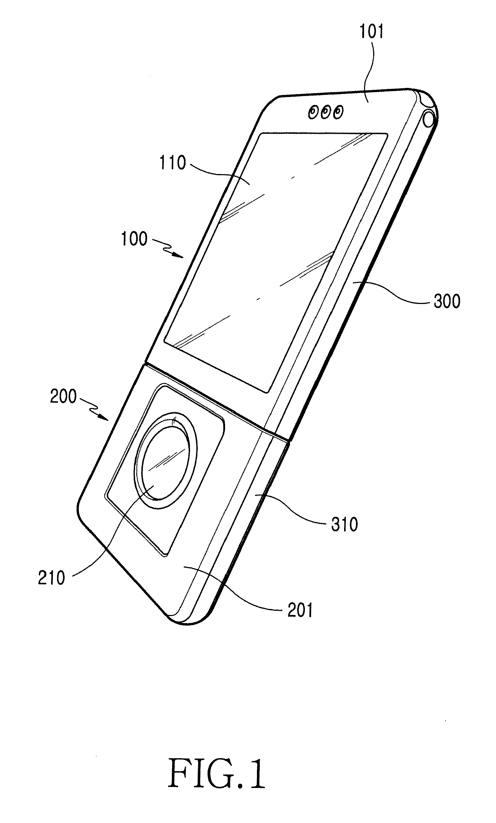

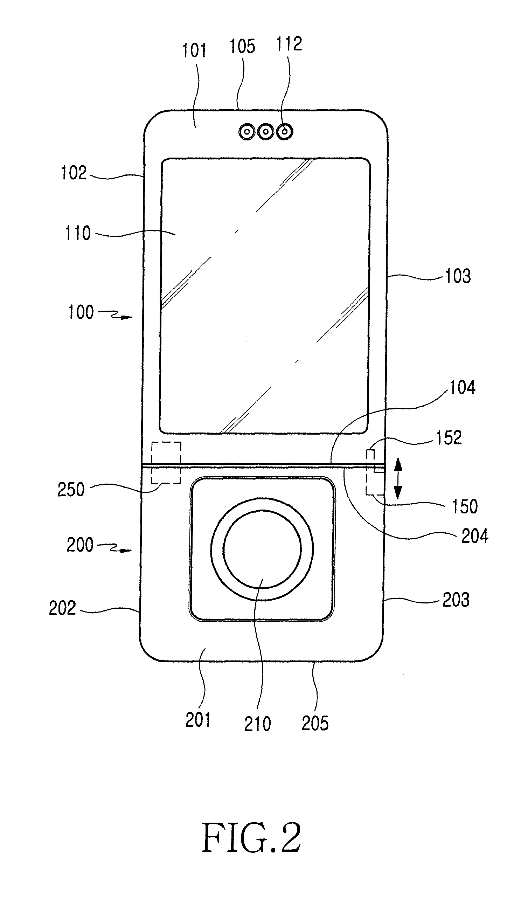

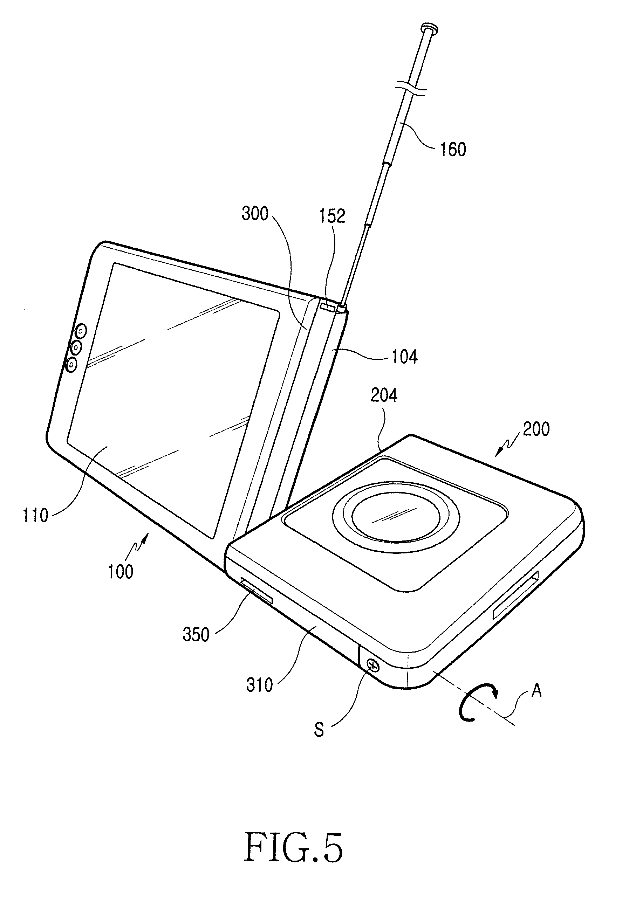

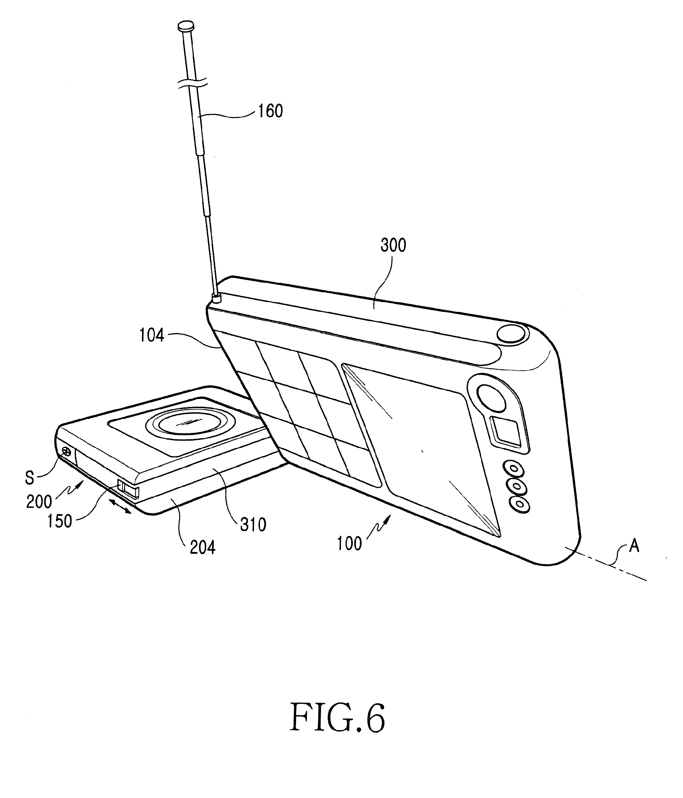

As illustrated in FIGs. 1 through 4, a portable terminal according to the present invention does not need a separate cradle, by providing a self-cradling function, and provides structural robustness to resist a twist during rotation or stress, scratches, and cracks if dropped. In particular, the portable terminal according to the present invention is convenient for use in watching moving pictures through its self-cradling function. The portable terminal according to the present invention includes two plate-type main bodies, specifically a main body 100 having a first display device 110 and a second display device 120 and a cradle main body 200 that is coupled to the main body 100 in such a way to rotate with respect to an eccentric hinge axis A (Fig. 5) and supports the main body 100 in such a way that the main body 100 is cradled at an incline. A hinge module 250 (see FIG. 2) for rotatably connecting the cradle main body 200 to the main body 100 is combined with the main body 100 and the cradle main body 200. A driving force of the hinge module 250 can provide semi-automatic or automatic rotation of the cradle main body 200. In the present invention, when the hinge module 250 is semi-automatic, a stopping force is provided by the hinge module 250 when the cradle main body 200 rotates to a plurality of angles, such as for example 0°, 30° through 45°, or 180° from the main body 100. As shown FIGs. 5 and 6, the cradle main body 200 is stopped by the hinge module 250 when rotating about 45° from the main body 100.

The main body 100 includes the first display device 110 on its top face 101 and the second display device 120 on its bottom face 106. The first display device 110 and the second display device 120 may be implemented with touch screens having data input/output functions, without being limited to Liquid Crystal Displays (LCDs). The first display device 110 has a wide screen and thus is used mainly for watching moving pictures, e.g., for multimedia such as Digital Multimedia Broadcasting (DMB), Portable Multimedia Player (PMP), Video On Demand (VOD), MP3, or image viewer. The second display device 120 is used basically in a phone mode. The first display device 110 and the second display device 120 are disposed in such a way that they face each other and are back to back in stacked relation to each other in the main body 100. The first display device 110 is preferably larger than the second display device 120. The main body 100 further includes a camera lens module 140 on its bottom face 106. The camera lens module 140 is positioned immediately adjacent to the second display device 120 and farthest from the hinge axis A and in a corner portion on the bottom face 106 of the main body 100. An illumination device or flash 142 is disposed beside the camera lens module 140.

The cradle main body 200 is coupled to the main body 100 in such a way to rotate with respect to the eccentric hinge axis A that extends in the lengthwise direction of the main body 100 and penetrates areas, except for the centers of sides 104 and 105 of the main body 100, thereby supporting the inclined state of the main body 100. In other words, the cradle main body 200 has a data input function and a cradling function. The eccentric hinge axis A extends linearly in a longitudinal direction along one side of each of the main body 100 and the cradle main body 200.

The cradle main body 200 includes a plurality of keys, i.e., a first key 210 on its top face 201 and second keys 220 and 221 on its bottom face 206. The first key 210 facilitates manipulation by being implemented with a wheel-type key and the second keys 220 and 221 include an array of a plurality of keys, i.e., a 4-way key and a navigation key.

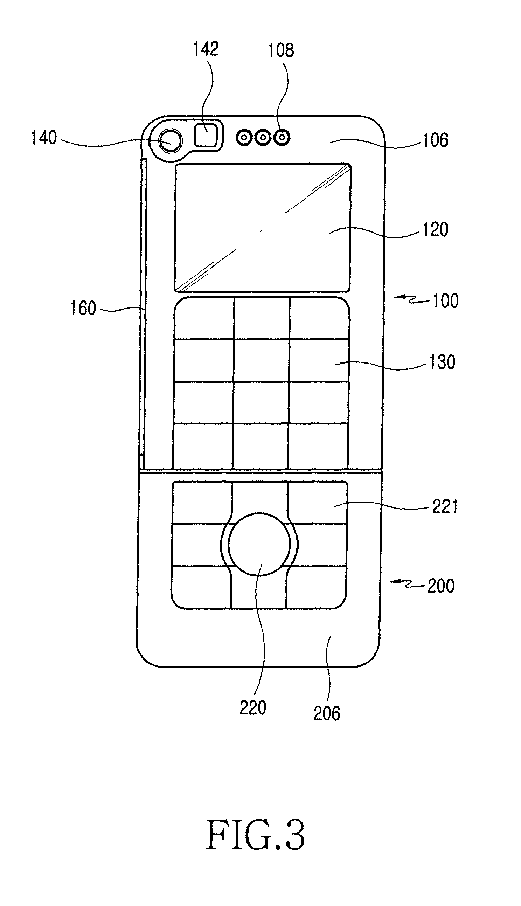

As illustrated in FIG. 3, the main body 100 has a third key array 130 on its bottom face 106. The third key array 130 includes a 3x4 key matrix and is positioned adjacent to the second display device 120 and the second keys 220 and 221.

As illustrated in FIGs. 2 through 4, the portable terminal according to the present invention includes structurally enforced first protection means 300 and second protection means 310 to resist a twist caused by a number of rotations of the cradle main body 200 or to resist damage in the event of dropping. The main body 100 includes the first protection means 300 along its edges. The first protection means 300 is implemented with a metal band that continuously surrounds both lateral sides 102 and 103 and a rear side 104 of the main body 100. The cradle main body 200 includes the second protection means 310 along its edges. The second protection means 310 is implemented with a metal band that continuously surrounds both lateral sides 202 and 203, a front side 204, and a rear side 205 of the cradle main body 200. The first protection means 300 and the second protection means 310 surround sides of the main body 100 and the cradle main body 200 to protect them against an external environment that includes dropping caused by user's carelessness or excessive rotation with respect to the hinge axis.

FIGs. 5 and 6 illustrate the cradled state of the portable terminal according to the present invention. The cradle main body 200 rotates with respect to the hinge axis A to support the main body 100, specifically the first display device 110 in such a way that the first display device 110 is cradled at an incline.

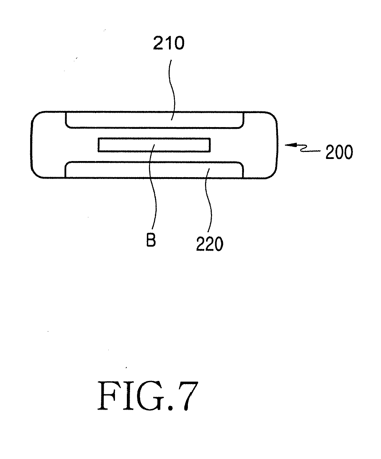

As illustrated in FIG. 7, the first key 210 and the second key 220 are disposed on top and bottom faces of the cradle main body 200 in such a way that they face each other and are back-to-back in stacked relation to each other. A battery B is included between the first key 210 and the second key 220. The battery B is mounted in the cradle main body 200 to provide stability to the cradled main body 100. In other words, the battery B allows stable cradling because of its weight.

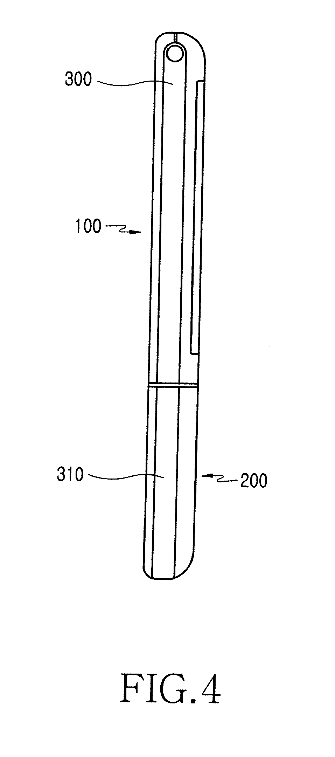

As illustrated in FIGs. 4, 5, and 7, the battery B is detached by separating an engaged screw S from the second protection means 3 10 and then separating the second protection means 310 from the cradle main body 200.

As illustrated in FIGs. 5 and 6, a rotational, retractable antenna 160 is mounted in a side of the main body 100. The rotational, retractable antenna 160 is used after being drawn from and then rotated in a DMB mode or a TV mode. In addition, the rotational, retractable antenna 160 may also be used in the phone mode.

When the portable terminal in a state illustrated in FIG. 3 is used in the phone mode, a separate locking device (not shown) may be installed in a side that is opposite to the hinge module 250 in order to maintain the state shown. The portable terminal in states illustrated in FIGs. 5 and 6 is used in the TV mode or the DMB mode. Reference numeral 112 in FIG. 2 refers to a first speaker and reference numeral 108 in FIG. 3 refers to a second speaker. Although a microphone is not shown in figures, it may be mounted in a predetermined position of the cradle main body 200.

As illustrated in FIG. 2, the portable terminal according to the present invention includes a locking device to maintain the state illustrated in FIG. 1. The locking device includes a sliding locking knob 150 provided in the cradle main body 200 and an opening 152 formed in the main body 100. When the sliding locking knob 150 is combined with the opening 152, a state in which the cradle main body 200 is bound to the main body 100, i.e., the state illustrated in FIG. 3, is maintained. When the sliding locking knob 150 is completely detached from the opening 152 by moving, the bound state of the cradle main body 200 to the main body 100 is released and thus the cradle main body 200 can rotate, as illustrated in FIGs. 5 and 6.

The hinge module 250 illustrated in FIG. 2 may substitute for the locking device. In other words, the hinge module 250 may provide a stopping force for the cradle main body 200 when the cradle main body 200 rotates 0° from the main body 100, thereby maintaining a state in which the cradle main body 200 is locked with the main body 100. The hinge module 250 may also provide automatic, manual, and semi-automatic rotation forces to the cradle main body 200.

As described above, the portable terminal according to the present invention is economic to users or manufactures by providing a self-cradling function, which is easy to cradle, and can be stably cradled. Moreover, to provide optimal user interfacing environments to users, the portable terminal includes two display devices on top and bottom faces of the main body: one is used in the phone mode and the other is used for a multimedia mode such as a DMB mode. Furthermore, the portable terminal provides structural robustness against rotation or dropping to the main body and the cradle main body, thereby improving the reliability of a product. The portable terminal also provides stability to the cradled main body due to the weight of the battery embedded in the cradle main body.

## Claims

1. A self-cradling type portable terminal comprising:
a main body (100) having a first display device (110) and a second display device (120) on top and bottom faces (101,106); and
at least one cradle main body (200) having a plurality of keys (210,220,221) and coupled to the main body (100) in such a way to rotate with respect to an eccentric hinge axis (A) that extends in a lengthwise direction of the main body (100) and penetrates areas, other than the centers of sides (104,105) of the main body (100), thereby supporting an inclined state of the main body (100).

2. The self-cradling type portable terminal of claim 1, wherein the keys comprise:
a first key (210) disposed on the top face (201) of the cradle main body (200); and
a second key (220) disposed on the bottom face (206) of the cradle main body (200),
wherein at least the first key (210) is a wheel type key.

3. The self-cradling type portable terminal of claim 2, wherein the main body (100) comprises a third key array (130) on its bottom face (106), and the third key array (130) is adjacent to the second display device (120).

4. The self-cradling type portable terminal of claim 1, wherein the main body (100) further comprises a camera lens module (140) on its bottom face (106) and the camera lens module (140) is positioned adjacent to the second display device (120), located farthest from the hinge axis (A) and in a corner portion on the bottom face (106) of the main body (100).

5. The self-cradling type portable terminal of claim 1, wherein the main body (100) further comprises a first protection means (300) along its edges to provide structural robustness.

6. The self-cradling type portable terminal of claim 5, wherein the first protection means (300) is implemented with a metal band that continuously surrounds lateral sides (102,103) and a rear side (104) of the main body (100).

7. The self-cradling type portable terminal of claim 1, wherein the cradle main body (200) further comprises a second protection means (310) along its edges to provide structural robustness.

8. The self-cradling type portable terminal of claim 7, wherein the second protection means (310) is implemented with a metal band that continuously surrounds lateral sides (202,203), a rear side (205), and a front side (205) of the cradle main body (200).

9. The self-cradling type portable terminal of claim 2, wherein the first display device (110) and the second display device (120) are stacked in relation to each other in the main body (100) and the first key (210) and the second key (220) are stacked in relation to each other in the cradle main body (200).

10. The self-cradling type portable terminal of claim 1, wherein the cradle main body (200) is coupled to the main body (100) in such a way to rotate with respect to the eccentric hinge axis (A).

11. The self-cradling type portable terminal of claim 2, wherein a battery (B) is further included between the first key (210) and the second key (220) to provide stability to the cradled main body (200).

12. The self-cradling type portable terminal of claim 1, wherein the main body (100) comprises a rotational, retractable antenna (160) that is received along one side of the main body (100).

13. The self-cradling type portable terminal of claim 1, further comprising a locking device in a side that is opposite to the hinge axis (A) to bind the cradle main body (200) to the main body (100).

14. The self-cradling type portable terminal of claim 13, wherein the locking device comprises:
a sliding locking knob (150) included in the cradle main body (200); and
an opening (152) included in the main body (100) to be combined with the sliding locking knob (150).
